(19) Europäisches Patentamt / European Patent Office / Office européen des brevets

(11) **EP 3 023 698 B1**

(12) **EUROPÄISCHE PATENTSCHRIFT**

(45) Veröffentlichungstag und Bekanntmachung des Hinweises auf die Patenterteilung:
**04.04.2018  Patentblatt 2018/14**

(51) Int Cl.:
*F02C 7/228* (2006.01)       *F02C 9/34* (2006.01)
*F02C 9/28* (2006.01)       *F23R 3/34* (2006.01)

(21) Anmeldenummer: **15195002.9**

(22) Anmeldetag: **17.11.2015**

(54) **VORRICHTUNG ZUR BESTIMMUNG EINES STUFUNGSVERHÄLTNISSES, EINE GASTURBINE ODER EIN FLUGZEUGTRIEBWERK MIT EINER SOLCHEN VORRICHTUNG UND EINE VERWENDUNG DAFÜR**

DEVICE FOR DETERMINING A STAGING RATIO, A GAS TURBINE OR AIRCRAFT ENGINE HAVING SUCH A DEVICE AND USE THEREOF

DISPOSITIF DE DÉTERMINATION D'UN RAPPORT D'ÉTAGEMENT, UNE TURBINE A GAZ OU MOTEUR D'AERONEF COMPRENANT UN TEL DISPOSITIF ET SON UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.11.2014   DE 102014223637**

(43) Veröffentlichungstag der Anmeldung:
**25.05.2016   Patentblatt 2016/21**

(73) Patentinhaber: **Rolls-Royce Deutschland Ltd & Co KG**
**15827 Blankenfelde-Mahlow (DE)**

(72) Erfinder:
• **HÜBNER, Gerhard**
  **10245 Berlin (DE)**

• **LEITGES, Fabian**
  **12107 Berlin (DE)**
• **LEWARK, Andreas**
  **14167 Berlin (DE)**

(74) Vertreter: **Maikowski & Ninnemann**
**Patentanwälte Partnerschaft mbB**
**Postfach 15 09 20**
**10671 Berlin (DE)**

(56) Entgegenhaltungen:
**EP-A2- 0 733 861       EP-A2- 1 746 347**
**WO-A1-93/09339       US-A- 5 261 222**
**US-A1- 2012 017 600       US-B1- 6 389 816**

EP 3 023 698 B1

**Beschreibung**

Die Erfindung betrifft eine Vorrichtung zur Bestimmung eines Stufungsverhältnisses in mindestens einer gestuften Brennkammer in einer Gasturbine oder in einem Flugzeugtriebwerk mit den Merkmalen des Anspruchs 1, eine Gasturbine oder ein Flugzeugtriebwerk mit den Merkmalen des Anspruchs 13 und eine Verwendung dafür gemäß Anspruch 14.

In Flugzeugtriebwerken oder Gasturbinen werden gestufte Brennkammern eingesetzt, wobei Pilotbrenner der gestuften Brennkammer stets mit einer Mindestmenge an Brennstoff versorgt werden. Hauptbrenner der gestuften Brennkammer werden hingegen nur bei einer höheren geforderten Leistung zugeschaltet. Das Verhältnis des Pilotbrennstoffstroms zum Gesamtbrennstoffstrom wird Stufungsverhältnis genannt. Stromabwärts einer die gesamte Brennstoffmenge bestimmenden Steuerventileinheit ist eine Stufungsventileinheit vorgesehen, mit der der Gesamtbrennstoffmassenstrom auf den Pilotbrenner und den Hauptbrenner veränderbar aufteilbar ist. Die Steuerventileinheit und / oder die Stufungsventileinheit können von einem Triebwerksregler angesteuert werden, der für die Ansteuerung der Stufungsventileinheit die gewünschte Triebwerksleistung zugrunde legt. Ein derartiges System ist z.B. aus der WO 95/17632 A1 oder der EP 1 079 179 B1 bekannt.

Die WO 93/09339 A1 beschreibt eine Steuervorrichtung für ein Gasturbinentriebwerk.

In der EP 1 746 347 A2 ist Verfahren zum Betrieb einer mehrstufigen Brennkammer eines Gasturbinentriebwerks beschrieben.

Die US 6 389 816 B1 beschreibt ein Kraftstoffsystem für die Lieferung von Kraftstoff von einer Kraftstoffquelle zu einer Brennkammer in einem Gasturbinentriebwerk. Das Dokument US 5261222 A offenbart eine Vorrichtung zur Bestimmung eines vorgewählten geforderten Stufungsverhältnisses für eine gestuften Brennkammer nach dem Oberbegriff des Anspruchs 1.

Bei der Steuerung der Ventileinheiten ist es wichtig, dass vorrangig die Betriebssicherheit gegeben ist. Des Weiteren soll die Wirtschaftlichkeit optimiert und die Emissionen (z.B. $NO_x$-Emission, Rauch, unverbrannte Kohlenwasserstoffe) begrenzt werden.

Dazu werden Vorrichtungen benötigt, mit denen ein End-Stufungsverhältnis unter einer Vielzahl von Bedingungen sicher, wirtschaftlich und emissionsarm ermittelbar ist.

Dies wird durch eine Vorrichtung mit den Merkmalen des Anspruchs 1 erreicht.

Dabei ist eine erste Einstellvorrichtung zur Bestimmung eines vorgewählten geforderten Stufungsverhältnisses für die gestufte Brennkammer vorgesehen, wobei diese Bestimmung in Abhängigkeit von der Erkennung eines stationären Zustands oder von der Erkennung eines transienten Zustands durchführbar ist, wobei die Erkennung insbesondere aufgrund einer Brennkammeraustrittstemperatur, einer Turbineneingangstemperatur und / oder eines Wertes für das Brennstoff-Luftverhältnis durchführbar ist. Zur Berücksichtigung der Rauchemissionen ist ein gefordertes Stufungsverhältnis in Abhängigkeit von einer Rauchgrenze bestimmbar, wobei als ein erster Stufungsverhältnisparameter der jeweils kleinere Wert des vorgewählten geforderten Stufungsverhältnisses und des geforderten Stufungsverhältnisses für die Rauchgrenze bestimmbar ist. Die Rauchgrenze kann z.B. als Funktion des Brennstoff-Luft-Verhältnis berechnet werden.

Das Brennstoff-Luftverhältnis und Brennkammeraustrittstemperatur können durch Syntheseverfahren berechnet werden, wobei weitere Sensorwerte, wie z.B. Kompressoraustrittstemperatur und -druck oder der Gesamtbrennstoffmassenstrom verwendbar sind. Zur Erkennung des transienten Zustands wird z.B. primär die Schubhebelstellung und der Brennstoffmassenstrom bzw. dessen erste Zeitableitung verwendet. Als Ergebnis wird ein Stufungsverhältnis bestimmt. Dieses kann dann z.B. über eine Tabelle in Abhängigkeit vom Gesamtbrennstoffstrom in einen Sollwert für die Ventilposition umgerechnet werden. Diese Ventilposition wird dann von einer separaten Steuerventileinheit eingestellt.

Das berechnete Stufungsverhältnis kann dem End-Stufungsverhältnis entsprechen oder kann als Rechengröße verwendet werden, um schließlich zu einem End-Stufungsverhältnis zu gelangen.

In einer Ausführungsform ist ein Bestimmungsmittel zur Unterscheidung des stationären Zustandes vom transienten Zustand vorgesehen, wobei die Unterscheidung insbesondere anhand eines Temperaturwertes repräsentativ für das Stufungsverhältnis in der gestuften Brennkammer durchführbar ist. Ein Ausgangssignal des Bestimmungsmittels beeinflusst die Stellung der ersten Einstellvorrichtung. Durch die gezielte Auswahl des vorgewählten geforderten Stufungsverhältnisses in Abhängigkeit vom Betriebszustand, können stationäre oder transienten Steuer- und Regelgesetze ausgewählt werden, die für den jeweiligen Betriebszustand ausgelegt sind.

Neben der Rauchemission ist die Verlöschgrenze ein wichtiger Betriebsparameter, so dass in einer Ausführungsform ein zweiter Stufungsverhältnisparameter aus dem ersten Stufungsverhältnisparameter und einem geforderten Stufungsverhältnis für die Verlöschgrenze bestimmbar ist, das repräsentativ für die Verlöschgrenze der Flamme in der gestuften Brennkammer, insbesondere repräsentativ für die magere Flammenverlöschung (Weak Extinction Limit WEX Lim) ist, wobei jeweils der größere Wert des geforderten Stufungsverhältnisses für die Verlöschgrenze und des ersten Stufungsverhältnisparameters als zweiter Stufungsverhältnisparameter bestimmbar ist.

Damit werden die Rauchemission und die Verlöschgrenze bei der Bestimmung des End-Stufungsverhältnisses berücksichtigt. Durch die Abfolge in der Logik hat die Verlöschgrenze aber eine höhere Priorität, so dass im Konfliktfall, der z.B. durch schlechte Sensoren bzw. Sensorausfälle und damit durch ein ungenau bestimmtes Brennstoff/Luft-Verhältnis entstehen kann, eher Rauch in Kauf genommen wird, bevor das Triebwerk ausfällt.

Eine weitere Ausführungsform weist eine zweite Einstellvorrichtung zur Bestimmung eines dritten Stufungsverhältnisparameters in Abhängigkeit von mindestens einem geforderten Stufungsverhältnis in Abhängigkeit von einem Redundanzregelsatz bestimmbar ist, wobei die Wahl einer Voreinstellung der zweiten Einstellvorrichtung insbesondere in Abhängigkeit von dem Redundanzregelsatz erfolgt.

Für die Gesamtsteuerung der Brennkammer ist es auch sinnvoll, wenn bestimmte abnorme Betriebszustände in der Gasturbine oder im Flugzeugtriebwerk berücksichtigt werden. Daher weist eine weitere Ausführungsform eine dritte Einstellvorrichtung zur Bestimmung eines vierten Stufungsverhältnisparameters in Abhängigkeit von mindestens einem geforderten Stufungsverhältnis für die Berücksichtigung von Turbinenbetriebszuständen auf, das in Abhängigkeit von einem Turbinenbetriebsparameter zur Charakterisierung abnormer Betriebszustände bestimmbar ist, wobei insbesondere die Wahl einer Voreinstellung der dritten Einstellvorrichtung insbesondere in Abhängigkeit von dem Turbinenbetriebsparameter zur Charakterisierung abnormer Betriebszustände erfolgt. Dabei kann ein Turbinenbetriebsparameter abnorme Betriebszustände z.B. das Starten der Turbine, das Wiederzünden der Turbine, einen Wassereintritt, einen Druckstoß und / oder ein Verlöschen der Verbrennung charakterisieren.

In einer weiteren Ausführungsform ist ein gefordertes Stufungsverhältnis für minimalen Brennstoffstrom in Abhängigkeit vom Gesamtbrennstoffstrom bestimmbar, wobei der jeweils größere Wert des geforderten Stufungsverhältnisses für minimalen Brennstoffstrom oder des vierten Stufungsverhältnisparameters als ein fünfter Stufungsverhältnisparameter bestimmbar ist.

In bestimmten Betriebsbereichen ist ein dauerhafter Betrieb nicht möglich, so dass in einer Ausführungsform ein gefordertes Stufungsverhältnis für die Berücksichtigung eines Sperrbereichs in Abhängigkeit von Parametern bestimmbar ist, das repräsentativ für einen Bereich von Brennstoffstromverhältnissen ist, der aufgrund von hydrodynamischen und / oder thermischen Randbedingungen nicht einstellbar ist. Somit sind bestimmte Stufungsverhältnisse aufgrund hydrodynamischer oder thermischer Beschränkungen nicht einstellbar (Sperrbereich, auch "Keep-out-zone", KOZ genannt), so dass nur außerhalb des gesperrten Bereichs kommandiert werden kann.

In einer weiteren Ausführungsform ist ein gefordertes Stufungsverhältnis für den Schutz vor Brennstoffüberdruck in Abhängigkeit vom Brennstoffdruck im Brennstoffsystem des Pilotbrenners bestimmbar, wobei vom fünften Stufungsverhältnisparameter, dem geforderten Stufungsverhältnis für die Berücksichtigung des Sperrbereichs und dem gefordertes Stufungsverhältnis für den Schutz vor Brennstoffüberdruck jeweils der kleinste Wert als sechster Stufungsverhältnisparameter bestimmbar ist.

Leere Volumina innerhalb der Brennstoffleitungen und Injektoren können die Stabilität des Verdichters, der Verbrennung oder die Bereitstellung von Leistung gefährden. Daher ist in einer Ausführungsform ein gefordertes Stufungsverhältnis für den Brennstofffüllgrad des Injektors in Abhängigkeit vom Brennstofffüllgrad bestimmbar. Der Übergang von einem reinen Pilotbetrieb zum gemischten Betrieb macht das Füllen der zuvor leeren Volumina der Injektoren des Hauptbrenners erforderlich. Dieser Vorgang hat in kontrollierter Form bei einem bestimmten Stufungsverhältnis zu erfolgen, welches einen Kompromiss zwischen Fülldauer, temporärem Schubverlust und Auswirkung auf die Stabilität des Verdichters darstellt. Ein Füllungsmodell berechnet dabei voraus, wie lange es dauert, die Hauptinjektoren zu füllen. Während dieser Zeit wird das für die Füllung ("Priming") bestimmte Stufungsverhältnis erzwungen.

Zur Integration der Werte ist in einer Ausführungsform das Stufungsverhältnis durch eine vierte Einstellvorrichtung zwischen dem sechsten Stufungsverhältnisparameter und dem geforderten Stufungsverhältnis für den Brennstofffüllgrad des Injektors auswählbar, wobei durch das geforderte Stufungsverhältnis für den Brennstofffüllgrad des Injektors eine Voreinstellung der vierten Einstellvorrichtung möglich ist.

Ferner kann in einer weiteren Ausführungsform die Einstellung des Stufungsverhältnisses in Abhängigkeit von einem Stufungsverhältnis und / oder einem

Stufungsverhältnisparameter erfolgen, der charakteristisch für die Rauchgrenze, dem Grenzwert für die Verlöschgrenze, einem Turbinenbetriebsparameter, einem Redundanzregelgesetz, dem Gesamtbrennstoffstrom, einem Bereich von Brennstoffverhältnissen, der aufgrund von hydrodynamischen oder thermischen Randbedingungen nicht einstellbar ist, dem Brennstoffdruck im Brennstoffsystem des Pilotbrenners und / oder dem Brennstofffüllungsgrad ist.

In einer weiteren Ausführungsform dient eine Ventilvorrichtung der Einstellung des End-Stufungsverhältnisses zwischen mindestens einem Pilotbrenner und / oder mindestens einem Hauptbrenner, wobei der mindestens eine Pilotbrenner relativ zum mindestens einen Hauptbrenner ein fetteres Brennstoffgemisch in die Brennkammer einbringt. Dabei ergibt sich zur Sicherstellung eindeutiger Betriebszustände die Einstellung der Ventilvorrichtung aus dem Stufungsverhältnis durch eine streng monotone Funktion.

Die Aufgabe wird auch durch ein Flugzeugtriebwerk nach Anspruch 13 und die Verwendung nach Anspruch 14 gelöst.

Ausführungsformen der Erfindung werden anhand der folgenden Figuren beispielhaft dargestellt. Es zeigen

Fig. 1    eine schematische Ansicht einer gestuften Brennkammer mit einer Ventilvorrichtung;

Fig. 2A    eine schematische Darstellung der Randbedingungen für den Betrieb eines Flugzeugtriebwerkes mit einer gestuften Brennkammer im Rahmen eines stationären Regelgesetzes;

Fig. 2B    eine schematische Darstellung der Randbedingungen für den Betrieb eines Flugzeugtriebwerkes mit einer gestuften Brennkammer im Rahmen eines transienten Regelgesetzes;

Fig. 2C    eine schematische Darstellung der Randbedingungen für den Betrieb eines Flugzeugtriebwerkes mit einer gestuften Brennkammer zum Schutz vor einem Überdruck in einer Pilotbrennstoffleitung;

Fig. 3    eine schematische Funktionsdarstellung einer Ausführungsform einer Vorrichtung zur Einstellung eines Stufungsverhältnisses;

Fig. 4    eine Darstellung der Erkennung von stationärem und transientem Verhalten;

Fig. 5    eine Darstellung unterschiedlicher Turbinenparameter zur Charakterisierung abnormer Betriebszustände der Turbine;

Fig. 6    eine Darstellung von Übergangsregeln vom reinen Pilotbetrieb zum gemischten Pilot/Hauptbrenner-Betrieb, unter Berücksichtigung eines gesperrten Bereichs an Stufungsverhältnissen, die aufgrund hydromechanischer Einschränkungen nicht kommandierbar sind.

Auch wenn im Folgenden Ausführungsformen der Vorrichtung und des Verfahrens zur Einstellung eines End-Stufungsverhältnisses $\alpha$ anhand eines Flugzeugtriebwerkes dargestellt werden, sind auch Ausführungsformen für gestufte Brennkammern auch in anderen Turbinen, z.B. in stationären Gasturbinen, Turbinen in Fahrzeugen oder Schiffsantrieben möglich.

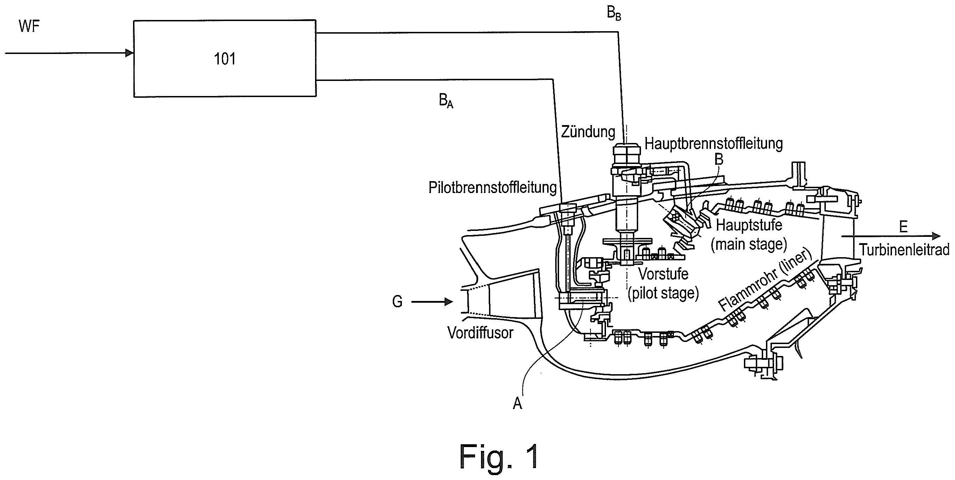

In Fig. 1 ist eine schematische Schnittansicht durch eine gestufte Brennkammer 100 eines Flugzeugtriebwerks dargestellt. In die gestufte Brennkammer 100 gelangt ein von einem vorgeschalteten, hier nicht dargestellten Kompressor geförderter und dabei verdichteter Gasstrom G oder Luftstrom, der den für die Verbrennung benötigten Sauerstoff mitführt.

Die Verbrennung erfolgt mit einen Gesamtbrennstoffstrom WF, der auf Brennstoffströme $B_A$, $B_B$ aufgeteilt wird, die an unterschiedlichen Stellen der gestuften Brennkammer 100 zugeführt werden.

Der Brennstoffstrom $B_A$ wird dabei über mindestens einen Pilotbrenner A, der restliche Brennstoffstrom $B_B$ wird über mindestens einen Hauptbrenner B in die gestufte Brennkammer 100 eingespeist.

Die Darstellung der gestuften Brennkammer 100 in Fig. 1 ist lediglich beispielhaft zu verstehen, wobei insbesondere die Anordnung der Brenner A, B in anderen Ausführungsformen anders gestaltet sein kann; insbesondere kann z.B. eine koaxiale Anordnung der Brenner A, B in der gestuften Brennkammer 100 vorliegen. Die gestufte Brennkammer 100 kann ringförmig ausgebildet sein, wobei die Injektoren der Brenner A, B diskret in bestimmten Winkelabständen angeordnet sein können.

Dabei wird im Betrieb des Flugzeugtriebwerks über den Pilotbrenner A ständig Brennstoff in der gestufte Brennkammer 100 verbrannt, während der Hauptbrenner B nur dann eingesetzt wird, wenn eine erhöhte Leistung gefordert wird. Der Pilotbrenner A wird z.B. allein im Leerlauf oder bei kleinen Brennstoffströmen einsetzt. Bei einer geforderten erhöhten Leistung, wie z.B. beim Start eines Flugzeugs, dient der mindestens eine Pilotbrenner A der besseren Zündung und der Stabilisierung des mindestens einen Hauptbrenners B. Es ist möglich, den Pilotbrenner A zu Testzwecken ganz zu deaktivieren.

Die Verbrennungsabgase verlassen die gestufte Brennkammer 100 am Ausgang E und treffen dann auf ein hier nicht dargestelltes Turbinenleitrad, d.h. den Turbineneingang.

Ein Stufungsverhältnis $\alpha$ ist definiert als das Verhältnis des Pilotbrennstoffstroms $B_A$ zum Gesamtbrennstoffstrom WF

$$\alpha = \frac{B_A}{B_A + B_B} = \frac{B_A}{WF}.$$

Das Stufungsverhältnis $\alpha$ wird durch eine Ventilvorrichtung 101 des Flugzeugtriebwerks gesteuert, wobei unterschiedliche berechnete Werte für Stufungsverhältnisse, Eingangsgrößen, Kennfelder und / oder Regelgesetze zur Bestimmung des Stufungsverhältnisses $\alpha$ verwendet werden. Damit kann das Endergebnis der Bestimmung des Stufungsverhältnisses auch als End-Stufungsverhältnis $\alpha$ bezeichnet werden.

Dabei arbeitet die Ventilvorrichtung 101 mit einem kontinuierlich arbeitenden Ventil, wobei das End-Stufungsverhältnis $\alpha$ und die Position des Ventils durch eine streng monotone Funktion definiert ist. Somit ist jedem End-Stufungsverhältnis $\alpha$ eindeutig genau eine Position der Ventilvorrichtung 101 zugeordnet und umgekehrt.

Im Betrieb müssen vom Flugzeugtriebwerk bestimmte Randbedingungen, z.B. betreffend die Sicherheit, die Umweltfreundlichkeit und die Wirtschaftlichkeit, eingehalten werden, wobei die Randbedingungen entsprechend ihrer Wichtigkeit priorisiert werden.

Notwendigerweise steht bei der Wahl des Betriebspunktes für das End-Stufungsverhältnis $\alpha$ die Sicherheit des Flugzeugtriebwerkes an oberster Stelle.

Im Folgenden werden Ausführungsformen für eine Einstellungsvorrichtung beschrieben, mit denen das End-Stufungsverhältnis α bestimmbar, steuerbar oder regelbar ist.

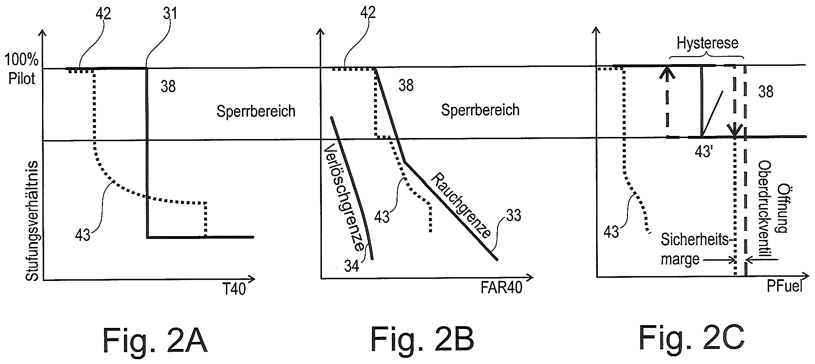

Dabei werden in Fig. 2A, 2B und 2C jeweils Betriebslinien 43 für einen Beschleunigungsvorgang vom Leerlauf auf Startschub und Felder für bestimmte Parameter in schematischer Weise dargestellt. Die Felder geben dabei Bereiche an, die für einen Betrieb unerwünscht werden, d.h. Betriebspunkte sollen nicht in diese Bereiche fallen.

Fig. 2A zeigt dabei das Verhalten unter einem stationären Regelgesetz 31, wobei auf der Ordinate des Koordinatensystems Werte des Stufungsverhältnisses α aufgetragen sind. Bei α=0 liegt ein mageres Gemisch vor, bei dem nur der Hauptbrenner B arbeitet. Bei der oberen Grenze (reinem Pilotbetrieb) liegt ein fettes Gemisch vor, bei dem nur der Pilotbrenner A arbeitet.

Auf der Abszisse der Fig. 2A ist die Brennkammeraustrittstemperatur T40 aufgetragen.

Ein Sperrbereich, die sogenannte Keep-out-Zone 38 ist der Betriebsbereich, der auf Grund hydrodynamischer und / oder thermischer Randbedingungen im Betrieb nicht einstellbar ist.

Im Leerlauf 42 (d.h. am Beginn der Beschleunigungs-Betriebslinie 43) des Flugzeugtriebwerks wird mit einem konstant fetten Gemisch gefahren, wobei die Brennkammeraustrittstemperatur bei der Beschleunigung T40 ansteigt. Dies wird in der Fig. 2A durch eine horizontale Linie symbolisiert.

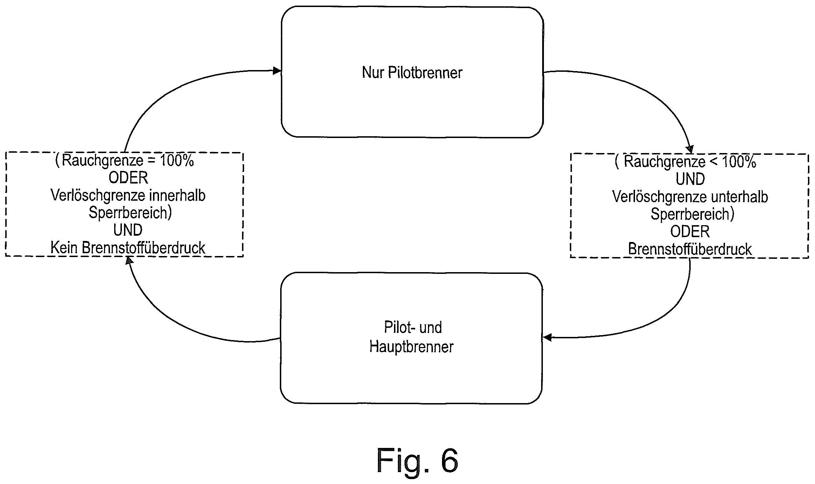

Zum Erreichen des eigentlichen Betriebszustands muss die Keep-out-Zone 38 sehr schnell durchfahren werden, d.h. das Stufungsverhältnis muss praktisch instantan gesenkt werden, was durch die senkrechte Betriebslinie angedeutet wird (siehe auch Fig. 6). Am Ende des Beschleunigungsvorgangs ist der gewünschte stationäre Wert erreicht.

In Fig. 2B wird in analoger Weise das Verhalten eines Beschleunigungsvorgangs unter einem transientem Regelgesetz 32 dargestellt. Hierbei wird auf der Abszisse das Brennstoff-Luft Verhältnis FAR40 aufgetragen. Die Betriebslinie 43 verläuft hier zwischen der Verlöschgrenze der Flamme 34 (Schutz vor Verlöschen der Flamme) und der Rauchgrenze 33.

Diese transienten Betriebszustände 43 können dabei zwischen dem Bereich der Verlöschgrenze 34 und der Rauchgrenze 33 liegen. Dabei kann eine gewichtete Mittelung vorgenommen werden, so dass für den Fall der Beschleunigung die transienten Betriebszustände 43 näher am Bereich der Verlöschgrenze 34 liegen und für den Fall der negativen Beschleunigung näher am Bereich für die Rauchgrenze 33.

Sollte es zu einem Verlust an Genauigkeit oder einem Ausfall bei Sensoren kommen, deren Messwerte zur Berechnung der Rauchgrenze 33 und der Verlöschgrenze 34 benötigt werden, so bleibt das Stufungsverhältnis α so lange im reinen Pilotbetrieb, bis die Grenze für den Brennstoffdruck erreicht ist und dann wird ein Stufungsverhältnis α eingestellt, welches die Druckverteilung innerhalb zulässiger Grenzen hält. Dabei wird Rauchbildung in Kauf genommen, um einen Verlust an Leistung zu vermeiden.

Fig. 2C zeigt das Verhalten anhand einer Betriebslinie 43 unter einer Beschleunigung, wenn ein Schutz vor einem zu hohen Brennstoffdruck 39 im Brennstoffsystem des Pilotbrenners A angestrebt wird. Auf der Abszisse ist hier der Brennstoffdruck PFuel aufgetragen.

In Fig. 2C ist dargestellt wie ein "Flattern" der Steuerung des Brennstoffdrucks 39 im Pilotbrennstoffsystem verhindert werden kann, wenn der Hauptbrenner B ab- und zugeschaltet wird. Dabei wird eine Steuerung mit einer Hysterese verwendet, so dass ein zurückliegender Zeitraum bei der Steuerung berücksichtigt wird. Im Fall einer Beschleunigung, mit steigendem Druck im Pilotbrennstoffsystem (Abszisse) wird ab einer bestimmten Druckgrenze der Hauptbrenner B instantan zugeschaltet, so dass Stufungsverhältnis α sinkt (alternative Betriebsline 43' insbesondere für den Notfallbetrieb). Der Wert für das Zuschalten liegt unterhalb der Druckgrenze für die Öffnung des Druckventils, mit dem Druck zum Flugzeug geleitet wird. Dies würde zum Verlust der Kontrolle über den Triebwerksschub führen.

Der Hauptbrenner B wird bei einer negativen Beschleunigung aber nicht gleich bei Unterschreiten eines bestimmten Druckwertes wieder abgeschaltet, da dies zu einem "Flattern" führen könnte. Daher wird der Hauptbrenner B erst bei einem tieferen Druck wieder abgeschaltet, was die Hysterese dargestellt.

In jedem Fall wird eine Sicherheitsmarge zum Öffnungsdruck eines Überdruckventils eingehalten, wodurch ein "loss of thrust control" (Verlust der Schubkontrolle) verhindert wird.

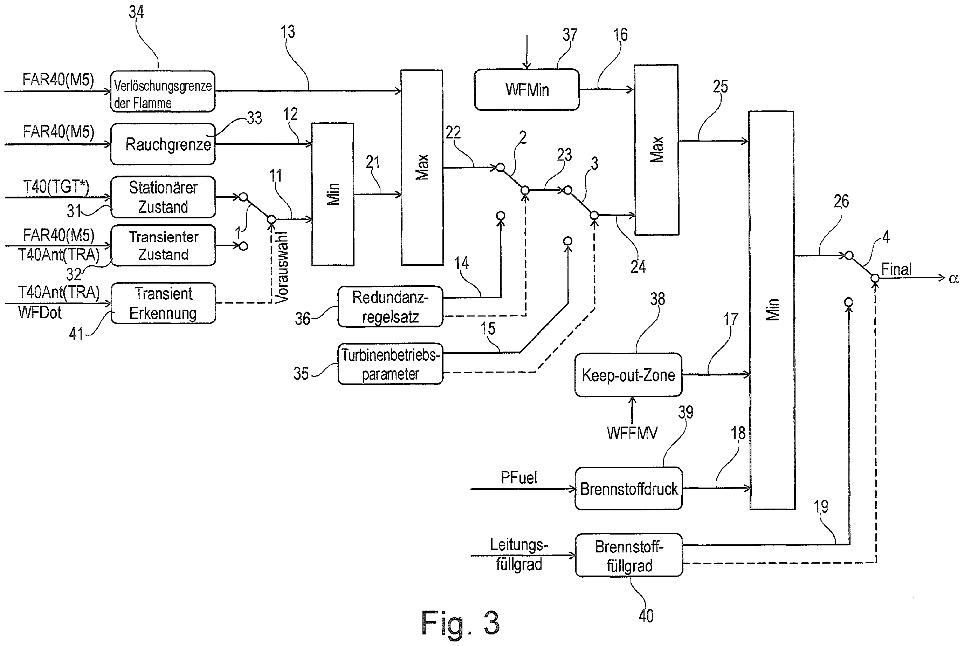

Ausgehend von diesen grundsätzlichen Verhältnissen wird anhand der Fig. 3 erläutert, wie eine Ausführungsform zur Einstellung des End-Stufungsverhältnisses α sicherstellen kann, dass die gesperrten Stufungsverhältnisse, wie z.B. in Fig. 2A bis 2C dargestellt, vermieden werden und gleichzeitig eine Priorisierung der automatischen Entscheidungen implementiert wird, so dass die Anforderungen an Sicherheit, Operabilität und Wirtschaftlichkeit eingehalten werden.

Dabei werden unterschiedliche Messungen und / oder Berechnungen durchgeführt, aus denen Stufungsverhältnisse 11, 12, 13, 14, 15, 16, 17, 18, 19 abgeleitet werden. Aus mehreren Stufungsverhältnissen 11, 12, 13, 14, 15, 16, 17, 18, 19 (und ggf. auch anderen Werten oder Parametern) werden Stufungsverhältnisparameter 21, 22, 23, 24, 25, 26 gebildet, wobei die Bildung davon abhängt, welcher der jeweiligen Werte oder Parameter der größte oder kleinste Wert ist. Durch Einstellvorrichtungen 1, 2, 3, 4 können unterschiedliche Eingangsgrößen für diesen Vergleich ausgewählt werden, so dass die Stufungsverhältnisparameter 21, 22, 23, 24, 25, 26 in flexibler Weise, aber in einer eindeutigen Hierarchie, bestimmt werden. Am Ende wird ein End-Stufungsverhältnis α bestimmt.

Ausgangspunkt dieses Vorgehens ist eine erste Einstellvorrichtung 1, die zwischen den Regelgesetzen für einen stationären Zustand 31 (siehe z.B. Fig. 2A) oder den Regelgesetzen für einen transienten Zustand 32 (siehe z.B. Fig. 2B) umschalten kann. Die stationären Regelgesetze 31 sind auf Effizienz und niedrige Emissionen ausgelegt und sollten möglichst häufig zum Einsatz kommen. Die transienten Regelgesetze 32 sind auf Stabilität ausgelegt und werden verwendet, wenn es notwendig ist.

Zur Bestimmung der geeigneten Regelgesetze 31, 32 werden z.B. Temperaturwerte verwendet, die für das Stufungsverhältnis repräsentativ sind. Für den Fall des stationären Zustandes 31 ist dies z.B. die Brennkammeraustrittstemperatur T40 (siehe Fig. 2A). Für den transienten (dynamischen) Zustand 32 ist dies z.B. das Brennstoff-Luft-Verhältnis (Fuel-Air-Ratio) FAR40 (siehe Fig. 2B) oder eine geschätzte Turbineneintrittstemperatur T40ant. Die Turbinenaustrittstemperatur T40ant kann z.B. anhand der Position des Gashebels geschätzt werden. Damit kann anhand der Schubhebelposition die Turbinenaustrittstemperatur T40ant am Ende eines transienten Manövers vorhergesagt werden, um bei der Einstellung des Stufungsverhältnisses der Änderung des thermodynamischen Zustandes zuvorkommen zu können.

Die Ausgabewerte der Regelgesetzte 31, 32 können als gefordertes Stufungsverhältnis für den stationären Zustand (Steady-state pilot split demand) und als gefordertes Stufungsverhältnis für den transienten Zustand (Transient pilot split demand) bezeichnet werden. Die erste Einstellvorrichtung 1 wählt zwischen diesen Stufungsverhältnissen aus.

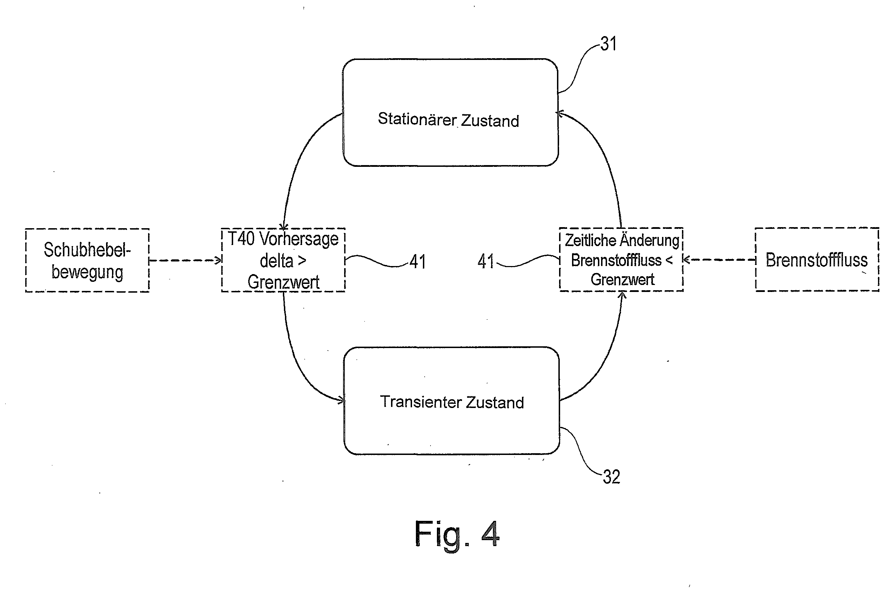

Dabei dient ein Bestimmungsmittel 41 zur Unterscheidung des stationären vom transienten Betrieb zur Ansteuerung des ersten Einstellmittels 1 (angedeutet durch die gestrichelte Linie in Fig. 3). Das Bestimmungsmittel 41 wird dabei in Abhängigkeit von der geschätzten Turbineneintrittstemperatur T40ant gesteuert. Diese Zusammenhänge werden in Zusammenhang mit der Fig. 4 noch näher erläutert.

Das so gewonnene vorgewählte geforderte Stufungsverhältnis 11 wird anschließend mit einem geforderten Stufungsverhältnis für die Rauchgrenze 12 verglichen, wobei das geforderte Stufungsverhältnis für die Rauchgrenze 12 aus einer Messung und / oder Berechnung der Rauchgrenze 33 gebildet wird. Der jeweils kleinere Wert des vorgewählten geforderten Stufungsverhältnisses 11 und des geforderten Stufungsverhältnisses für die Rauchgrenze 12 wird als erster Stufungsverhältnisparameter 21 gesetzt.

Diese Auswahl des kleinsten (in anderen Fällen auch eines größten) Wertes für die Stufungsverhältnisse 11, 12 erfolgt anhand einer Normierung der Eingangsgrößen auf einen Zahlenbereich für das Stufungsverhältnis, so dass die Stufungsverhältnisse 11, 12 als Eingangsgrößen und das Stufungsverhältnisparameter 21 als Ausgangsgröße dimensionsmäßig miteinander vergleichbar sind. Dies gilt für alle Min/Max Blöcke, die z.B. in der Fig. 3 dargestellt sind.

Ein Vergleich mit der Fig. 2B zeigt, dass an dieser Stelle der Bereich der Rauchgrenze 33 festgelegt, d.h. für Betriebsparameter grundsätzlich ausgeschlossen wird. Allerdings wird - wie im Folgenden noch dargestellt - dieser Bereich nicht ganz ausgeschlossen, da die Verlöschgrenze 34 eine höhere Priorität hat, da diese im nachfolgenden Schritt berücksichtigt wird.

Ein gefordertes Stufungsverhältnis 13 für die Verlöschgrenze 34 wird aus einer Messung und / oder Berechnung gebildet, die Aussagen über die Verlöschgrenze 34 (Weak Extinction Limit WEX) ermöglicht. Dieses geforderte Stufungsverhältnis 13 für die Verlöschgrenze 34 wird dann mit dem vorgewählten geforderten Stufungsverhältnis 11 verglichen, wobei der jeweils größte Wert als zweiter Stufungsverhältnisparameter 22 bestimmt wird. Durch einen Vergleich mit der Fig. 2B kann man sehen, dass die Berücksichtigung der Verlöschgrenze 34 und der Rauchgrenze 33 bereits einen relativ engen Raum für die Betriebsparameter zur Verfügung stellt. Dabei wird sichergestellt, dass die Verlöschgrenze 34 die höhere Priorität hat, als die Rauchgrenze 33. So wird im konkreten Fall zwischen den Stufungsverhältnissen 11, 12 das kleinere Stufungsverhältnis, als "weniger Pilot" ausgewählt, zwischen dem geforderten Stufungsverhältnis für die Verlöschgrenze 13 und dem Stufungsverhältnisparameter 21 hingegen das Größere, also "mehr Pilot". Im Zweifelsfall wird also "mehr Pilot" kommandiert, um das Triebwerk am Laufen zu halten, auch wenn dabei Rauch erzeugt wird.

Logisch darauf aufbauend, werden mit einer zweiten und dritten Einstellvorrichtung 2, 3 weitere Betriebsgrößen ausgewählt, anhand derer dann weitere Stufungsverhältnisparameter 23, 24 bestimmt werden.

Zunächst kann die zweite Einstellvorrichtung 2 einen Redundanzregelsatz 36 auswählen, der ein gefordertes Stufungsverhältnis 14 für die Berücksichtigung eines Redundanzregelsatzes zur Verfügung stellt. Der Redundanzregelsatz 36 benutzt das stationäre Stufungsverhältnis und eine vereinfachte Annahme des transienten Stufungsverhältnisses und nimmt das jeweils Konservativere (d.h. das Größere) davon. Der Redundanzregelsatz 36 wird z.B. durch die zweite Einstellvorrichtung 2 ausgewählt, wenn ein Fehler auf den Sensoreingängen für die nominalen Regelgesetze detektiert wurde. Die Fehlerbehandlung berücksichtigt dabei auch die "Schwere" des Fehlers. Bei geringeren Abweichungen wird der fehlerhafte Wert weiter benutzt bzw. durch ein Modell ersetzt.

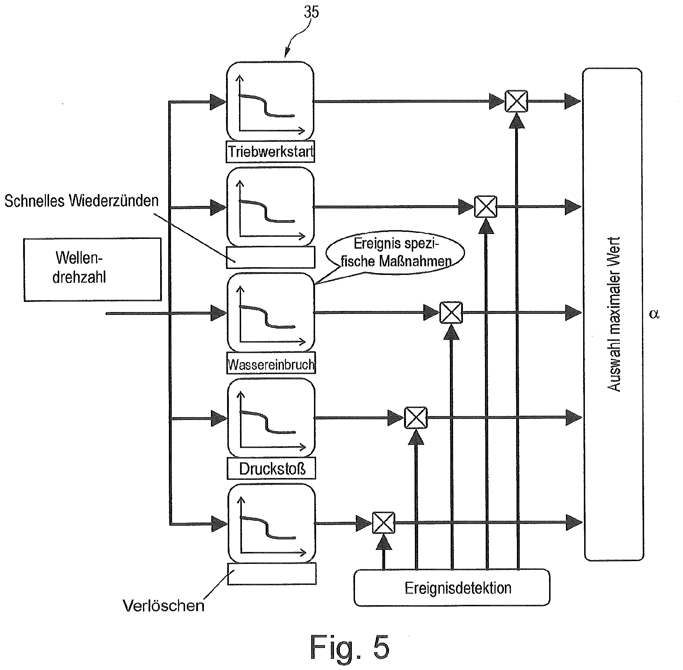

Daraus wird dann der dritte Stufungsverhältnisparameter 23 gebildet. Durch die dritte Einstellvorrichtung 3 werden dann Turbinenbetriebsparameter 35 zur Charakterisierung abnormer Betriebszustände (siehe Fig. 5) ausgewertet, wobei die Auswertung ein gefordertes Stufungsverhältnis 15 für die Berücksichtigung von Turbinenbetriebszuständen zur Verfügung stellt. Das dritte Einstellmittel 3 wählt dann zwischen dem dritten Stufungsverhältnisparameter 23 und dem geforderten Stufungsverhältnis 15 für die Berücksichtigung von Turbinenbetriebszuständen aus und stellt einen vierten Stufungsverhältnisparameter 24 zur Verfügung.

Die hier dargestellte Ausführungsform ist darauf ausgelegt, dass das Flugzeugtriebwerk möglichst lange bei niedrigen Emissionen betrieben werden kann, wobei die Sicherheitsanforderungen immer die höchste Priorität haben. Auch ist sichergestellt, dass die Bedingungen mit hinreichenden Sicherheitsabständen versehen sind.

Der Füllgrad mit Brennstoff (Priming) 40 und die Berücksichtigung von Turbinenbetriebsparametern 35 zur Charakterisierung abnormer Betriebszustände fließen ebenfalls in die Strategie mit ein.

Der vierte Stufungsverhältnisparameter 24 wird mit einem geforderten Stufungsverhältnis 16 für minimalen Brennstoffstrom verglichen, das aus einer Bestimmung des Gesamtbrennstoffstroms 37 abgeleitet wird. Der aus dem Gesamtbrennstoffstrom 37 abgeleitete Steuerwert dient dazu, eine Stufung weg vom reinen Pilotbetrieb zu unterbinden, wenn der Gesamtbrennstoffstrom 37 sehr klein ist. Das Problem in einem solchen Fall ist, dass im Hauptbrennerbetrieb B der Massenstrom auf doppelt so viele Düsen verteilt wird, wie im reinen Pilotbetrieb A. Diese Düsen sind durch federgesteuerte Regelventile abgesichert und unterliegen Fertigungstoleranzen. Bei sehr kleinem Massenstrom würde nur ein Teil der Ventile öffnen und man hätte eine stark inhomogene Temperaturverteilung am Brennkammeraustritt, weil nur einige Brenner aktiv wären. Die dabei entstehenden Temperaturspitzen könnten die Turbine beschädigen.

Der jeweils größere Wert bildet den fünften Stufungsverhältnisparameter 25. Dieser wird zusammen mit zwei weiteren Stufungsverhältnissen 17, 18 verglichen, wobei der kleinste der drei als sechster Stufungsverhältnisparameter 26 festgelegt wird.

Dabei wird ein gefordertes Stufungsverhältnis 17 für Berücksichtigung eines Sperrbereichs aus einer Steuervorschrift gebildet, die sich mit dem kontrollierten Durchfahren der so genannten Keep-out-Zone 38 (Sperrbereich) befasst. Dies wird in Fig. 6 näher erläutert.

Dabei wird das gefordertes Stufungsverhältnis 18 für den Schutz vor Brennstoffüberdruck aus einer Messung und / oder Berechnung des Brennstoffdrucks 39 PFuel im Brennstoffsystem des Pilotbrenners A abgeleitet. Im reinen Pilotbetrieb A kann nicht der maximale Brennstoffstrom für den Startschub eingespritzt werden. Dabei würde sonst durch den Überdruck das Treibstoffsystem beschädigt werden. Es gibt daher ein Überdruckventil, welches in diesem Fall Treibstoff zurück zum Flugzeug leitet, wobei aber die Regelung des Gesamtmassenstroms WF nicht mehr korrekt funktioniert. Demzufolge würde man beim Start erheblich an Schub verlieren. Um ein Öffnen des Überdruckventils zu vermeiden, soll vorher eine Stufung eingeleitet werden. Dieser Fall kann nur eintreten, wenn die in der Logik früher liegenden Regelgesetze, z.B. in Folge von unerkannten Sensorfehlern, versagt haben und reinen Pilotbetrieb kommandieren, obwohl der Hauptinjektor schon hätte zugeschaltet werden können.

Schließlich wählt eine vierte Einstellvorrichtung 4 zwischen dem sechsten Stufungsverhältnisparameter 26 und einem geforderten Stufungsverhältnis 19 für den Brennstofffüllgrad des Injektors aus. Das geforderte Stufungsverhältnis 19 für den Brennstofffüllgrad des Injektors wird von Messungen und / oder Berechnungen betreffend die Füllung der Leitungen mit Brennstoff (Priming) abgeleitet. Der Priming-Funktion liegt ein Modell zugrunde, welches den Brennstoffstrom in den Hauptbrenner B aufintegriert. Der Integrator startet bei Null. Wird ein Übergang vom Pilotbrenner-Betrieb A auf den Hauptbrenner-Betrieb B kommandiert, so läuft der Integrator hoch, bis der Zustand "gefüllt" erreicht ist, unter der Modellannahme, dass sich der tatsächliche Injektor ungefähr gleich schnell füllt. Während des Füllvorgangs wird dabei ein festes Stufungsverhältnis α eingestellt. Sobald die Füllung komplett ist, wird der sechste Stufungsverhältnisparameter 26 als Stufungsverhältnis α durchgeschaltet.

In alternativen Ausführungsformen müssen nicht immer alle Stufungsverhältnisse 11, 12, 13, 14, 15, 16, 17, 18, 19, Stufungsverhältnisparameter 21, 22, 23, 24, 25, 26 und / oder Messwerte oder berechneten Werte gemeinsam verwendet werden. Die Bildung von Unterkombinationen der Werte kann sinnvoll sein.

Bei dieser Ausführungsform wird eine Robustheit implementiert, indem bestimmte Anforderungen aufgegeben werden können, sofern weiterhin die Betriebssicherheit des Flugzeugtriebwerks gewährleistet ist und der Flug fortgesetzt werden kann, bis dann am Boden eine Instandsetzung erfolgt. So kann z.B. als Endergebnis ein konservatives End-Stufungsverhältnis α berechnet werden, welches unter Umständen zu Rauchbildung führt, aber weiterhin eine stabile Verbrennung gewährleistet (siehe z.B. Backup control law in Fig. 3). Außerdem kann man als "ausgefallen" diagnostizierte Sensoren durch Modellwerte ersetzen.

In Fig. 4 wird schematisch dargestellt, wie zwischen stationären Regelgesetzen 31 und transienten Regelgesetzen 32 ausgewählt wird, wobei die Auswahl in Abhängigkeit vom Bestimmungsmittel 41 erfolgt.

In Abhängigkeit von der Schubhebelbewegung für das Flugzeugtriebwerk wird vom Bestimmungsmittel 41 festgestellt, ob die Differenz der geschätzten Turbineneintrittstemperatur T40ant zu zwei unterschiedlichen Zeitpunkten einen bestimmten Grenzwert überschreitet. Wenn dies der Fall ist, wird auf die transienten Regelgesetze 32 umgeschaltet.

Eine Zurückschaltung auf die stationären Regelgesetze 31 erfolgt, wenn eine Messung und / oder Berechnung des Brennstoffflusses ergibt, dass die zeitliche Änderung des Brennstoffflusses unter einen bestimmten Grenzwert gefallen ist.

In Fig. 5 wird schematisch dargestellt, welche Ereignisse bei Turbinenbetriebsparametern 35 zur Charakterisierung abnormer Betriebszustände dazu verwendet werden können, um im Rahmen einer Vorrichtung oder eines Verfahrens zur Einstellung des Stufungsverhältnisses verwendet zu werden. Dabei geht es darum, dass in abnormen Betriebszuständen das Brennstoff-Luftverhältnis und / oder die Brennkammeraustrittstemperatur T40 u.U. nicht korrekt berechnet werden können. Deshalb wird in dieser Ausführungsform die Wellendrehzahl als robuster Parameter verwendet, der ein ungefähres Maß für den Leistungsumsatz innerhalb des Triebwerks darstellt. Sobald der abnorme Zustand beendet ist (z.B. Triebwerksstart komplett, Pumpstoß vorüber etc.) wird wieder auf die optimalen Regelgesetze umgeschaltet. Dabei wird im Ergebnis bei mehreren gleichzeitig aktiven Ereignissen das Ereignis mit dem höchsten Stufungsverhältnis bevorzugt

Ausgangspunkt ist die Erfassung einer Wellendrehzahl des Flugzeugtriebwerks. Dies erhöht die Robustheit, da Temperaturmessungen oder-bestimmungen, z.B. der Brennkammereintrittstemperatur T40 oder Bestimmungen der Fuel-Air-Ratio FAR40 dadurch ergänzt werden können.

Ausgehend davon können unterschiedliche, z.T. abnorme Betriebszustände erkannt werden, wie z.B. das Starten des Flugzeugtriebwerks, ein schnelles Wiederzünden des Flugzeugtriebwerks, der Einbruch von Wasser, ein Druckstoß in der Brennstoffförderung oder ein Verlöschen der Brennerflamme.

In Fig. 6 ist für eine Ausführungsform dargestellt, wie die so genannte Keep-Out-Zone 38 im Betrieb durchfahren werden kann. Wie in Zusammenhang mit Fig. 2A bis 2C dargestellt, ist das eine Zone, in der aufgrund von hydrodynamischen und / oder thermischen Bedingungen kein dauerhafter Betrieb möglich ist. Bei der Durchquerung der Keep-Out-Zone 38 soll sichergestellt werden, dass ein zur Kühlung der Hauptbrennerzuleitungen erforderlicher minimaler Brennstoffstrom nicht unterschritten wird.

Ausgehend von einem Betriebszustand, in dem nur der Pilotbrenner A arbeitet, wird der Hauptbrenner B zugeschaltet, wenn eine der folgenden Bedingungen erfüllt ist:

> a) Die Rauchgrenze sinkt unterhalb des reinen Pilotbetriebs und die Verlöschgrenze 34 muss unterhalb des Sperrbereichs (Keep-Out Zone 38) liegen.
> b) Es liegt ein Überdruck im Brennstoffsystem des Pilotbrenners A vor.

Ein Zurückschalten allein auf den Pilotbrenner A erfolgt, wenn eine der folgenden Bedingungen erfüllt ist:

> a) Die Rauchgrenze erlaubt reinen Pilotbetrieb oder die Verlöschgrenze liegt innerhalb des Sperrbereichs (Keep-Out Zone 38).
> b) Es liegt kein Überdruck im Brennstoffsystem des Pilotbrenners A vor.

Im Wesentlichen bestimmen also Rauch- und Verlöschgrenze das Zu- bzw. Abschalten des Hauptbrenners B.

**Bezugszeichenliste**

1     erste Einstellvorrichtung
2     zweite Einstellvorrichtung
3     dritte Einstellvorrichtung
4     vierte Einstellvorrichtung

11    vorgewähltes gefordertes Stufungsverhältnis (Preselected pilot split demand)
12    gefordertes Stufungsverhältnis für Rauchgrenze (PilotDemSmoke)
13    gefordertes Stufungsverhältnis für Verlöschgrenze (PilotDemWEX)
14    gefordertes Stufungsverhältnis für die Berücksichtigung eines Redundanzregelsatzes (PilotDemBackup)
15    gefordertes Stufungsverhältnis für die Berücksichtigung von Turbinenbetriebszuständen (PilotDemEvent)
16    gefordertes Stufungsverhältnis für minimalen Brennstoffstrom (PilotDemWFMin)
17    gefordertes Stufungsverhältnis für die Berücksichtigung eines Sperrbereichs (PilotDemKOZ)
18    gefordertes Stufungsverhältnis für den Schutz vor Brennstoffüberdruck (PilotDemPFuel)
19    gefordertes Stufungsverhältnis für den Brennstofffüllgrad des Injektors (PilotDemPriming)

21    erster Stufungsverhältnisparameter
22    zweiter Stufungsverhältnisparameter
23    dritter Stufungsverhältnisparameter
24    vierter Stufungsverhältnisparameter
25    fünfter Stufungsverhältnisparameter
26    sechster Stufungsverhältnisparameter

31    stationärer Zustand eines Messwertes und / oder berechneten Wertes
32    transienter Zustand eines Messwertes und / oder berechneten Wertes
33    Rauchgrenze
34    Verlöschgrenze der Flamme
35    Turbinenbetriebsparameter zur Charakterisierung abnormer Betriebszustände
36    Redundanzregelsatz
37    Gesamtbrennstoffstrom
38    Bereich von Brennstoffverhältnissen, der aufgrund von hydrodynamischen oder thermischen Randbedingungen nicht einstellbar ist (Keep-out Zone)
39    Brennstoffdruck
40    Brennstofffüllgrad

41 Bestimmungsmittel zur Unterscheidung eines stationären von einem transienten Zustand
42 Leerlauf
43 Betriebslinie

100 Brennkammer
101 Ventilvorrichtung zur Einstellung des Stufungsverhältnisses

$\alpha$ End-Stufungsverhältnis
A Pilotbrenner
B Hauptbrenner
$B_A$ Brennstoff für Pilotbrenner
$B_B$ Brennstoff für Hauptbrenner
E Ausgang Brennkammer

FAR40 Fuel Air Ratio (Brennstoff-Luft Verhältnis)
G Eintrittsgasstrom für die Brennkammer
Priming Brennstofffüllungsgrad
T40 Brennkammeraustrittstemperatur
T40Ant geschätzte Turbineneintrittstemperatur
WEXLim magere Flammenerlöschungsgrenze
WF Gesamtbrennstoffstrom

**Patentansprüche**

1. Vorrichtung zur Bestimmung eines Stufungsverhältnisses, insbesondere eines End-Stufungsverhältnisses ($\alpha$) in mindestens einer gestuften Brennkammer (100) einer Gasturbine oder eines Flugzeugtriebwerks, wobei eine erste Einstellvorrichtung (101) konfiguriert zur Bestimmung eines vorgewählten geforderten Stufungsverhältnisses (11) für die gestufte Brennkammer (100) ist, wobei diese Bestimmung in Abhängigkeit von der Erkennung eines stationären Zustands (31) oder der Erkennung eines transienten Zustands (32) durchführbar ist, wobei die Erkennung insbesondere aufgrund einer Brennkammeraustrittstemperatur (T40), einer Turbineneingangstemperatur und / oder eines Wertes für das Brennstoff-Luftverhältnis (FAR40) durchführbar ist, wobei ein gefordertes Stufungsverhältnis (12) in Abhängigkeit von der Bestimmung einer Rauchgrenze (33) zu bestimmen ist, wobei als ein erster Stufungsverhältnisparameter (21) der jeweils kleinere Wert des vorgewählten geforderten Stufungsverhältnisses (11) und des geforderten Stufungsverhältnisses (12) für die Rauchgrenze (33) bestimmt wird.

2. Vorrichtung nach Anspruch 1, **gekennzeichnet durch** ein Bestimmungsmittel (41) zur Unterscheidung des stationären Zustandes (31) vom transienten Zustand (32), insbesondere des Temperaturwertes repräsentativ für das Stufungsverhältnis ($\alpha$) in der Brennkammer (100), wobei ein Ausgangssignal des Bestimmungsmittels (41) die Stellung der ersten Einstellvorrichtung (1) beeinflusst.

3. Vorrichtung nach Anspruch 1 oder 2, **dadurch gekennzeichnet, dass** ein zweiter Stufungsverhältnisparameter (22) aus dem ersten Stufungsverhältnisparameter (21) und einem geforderten Stufungsverhältnis (13) für eine Verlöschgrenze (34) bestimmbar ist, der repräsentativ für die Verlöschgrenze (34) der Flamme in der Brennkammer (100), insbesondere repräsentativ für die magere Flammenverlöschung (WEX Lim) ist, wobei jeweils der größere Wert des geforderten Stufungsverhältnisses (13) für die Verlöschgrenze (34) und des ersten Stufungsverhältnisparameters (21) als zweiter Stufungsverhältnisparameter (22) bestimmbar ist.

4. Vorrichtung nach mindestens einem der vorhergehenden Ansprüche, **gekennzeichnet durch** eine zweite Einstellvorrichtung (2) zur Bestimmung eines dritten Stufungsverhältnisparameters (23) in Abhängigkeit von mindestens einem geforderten Stufungsverhältnis (14) in Abhängigkeit von einem Redundanzregelsatz (36) bestimmbar ist, wobei die Wahl einer Voreinstellung der zweiten Einstellvorrichtung (2) insbesondere in Abhängigkeit von dem Redundanzregelsatz (36) erfolgt.

5. Vorrichtung nach mindestens einem der vorhergehenden Ansprüche, **gekennzeichnet durch** eine dritte Einstellvorrichtung (3) zur Bestimmung eines vierten Stufungsverhältnisparameters (24) in Abhängigkeit von mindestens einem geforderten Stufungsverhältnis (15) für die Berücksichtigung von Turbinenbetriebszuständen, das in Abhängigkeit von einem Turbinenbetriebsparameter (35) zur Charakterisierung abnormer Betriebszustände bestimmbar ist, wobei insbesondere die Wahl einer Voreinstellung der dritten Einstellvorrichtung (3) insbesondere in Abhängigkeit von dem Turbinenbetriebsparameter (35) zur Charakterisierung abnormer Betriebszustände durchführbar ist, wobei insbesondere mindestens ein Turbinenbetriebsparameter (35) zur Charakterisierung abnormer Betriebszustände das Starten der Turbine, das Wiederzünden der Turbine, einen Wassereintritt, einen Druckstoß und / oder ein Verlöschen der Verbrennung charakterisiert.

6. Vorrichtung nach mindestens einem der vorhergehenden Ansprüche, **dadurch gekennzeichnet, dass** ein gefordertes Stufungsverhältnis (16) für minimalen Brennstoffstrom in Abhängigkeit von dem Gesamtbrennstoffstrom (37) bestimmbar ist, wobei der jeweils größere Wert des geforderten Stufungsverhältnisses (16) für minimalen Brennstoffstrom oder des vierten Stufungsverhältnisparameters (24) als ein fünfter Stufungsverhältnisparameter (25) bestimmbar ist.

7. Vorrichtung nach mindestens einem der vorhergehenden Ansprüche, **dadurch gekennzeichnet, dass** ein gefordertes Stufungsverhältnis (17) für Berücksichtigung eines Sperrbereichs (38) in Abhängigkeit von Parametern repräsentativ für den Bereich von Brennstoffstromverhältnissen bestimmbar ist, der aufgrund von hydrodynamischen und / oder thermischen Randbedingungen nicht einstellbar ist (38).

8. Vorrichtung nach mindestens einem der vorhergehenden Ansprüche, **dadurch gekennzeichnet, dass** ein gefordertes Stufungsverhältnis (18) für den Schutz vor Brennstoffüberdruck in Abhängigkeit vom Brennstoffdruck (39) im Brennstoffsystem des Pilotbrenners (A) bestimmbar ist, wobei vom fünften Stufungsverhältnisparameter (25), dem geforderten Stufungsverhältnis (17) für die Berücksichtigung eines Sperrbereichs (38) und dem geforderten Stufungsverhältnis (18) für den Schutz vor Brennstoffüberdruck jeweils der kleinste Wert als sechster Stufungsverhältnisparameter (26) bestimmbar ist.

9. Vorrichtung nach mindestens einem der vorhergehenden Ansprüche, **dadurch gekennzeichnet, dass** ein gefordertes Stufungsverhältnis (19) für den Brennstofffüllgrad (40) eines Injektors in Abhängigkeit vom Brennstofffüllgrad (40) bestimmbar ist.

10. Vorrichtung nach mindestens einem der vorhergehenden Ansprüche, **dadurch gekennzeichnet, dass** ein End-Stufungsverhältnis (α) durch eine vierte Einstellvorrichtung (4) zwischen dem sechsten Stufungsverhältnisparameter (26) und dem geforderten Stufungsverhältnis (19) für den Brennstofffüllgrad des Injektors auswählbar ist, wobei durch das geforderte Stufungsverhältnis (19) für den Brennstofffüllgrad des Injektors eine Voreinstellung der vierten Einstellvorrichtung (4) möglich ist.

11. Vorrichtung nach mindestens einem der vorhergehenden Ansprüche, **dadurch gekennzeichnet, dass** die Einstellung des End-Stufungsverhältnisses (α) in Abhängigkeit von mindestens einem Stufungsverhältnis (12, 13, 14, 15, 16, 17, 18, 19) und / oder mindestens einem Stufungsverhältnisparameter (21, 22, 23, 24, 25, 26) erfolgt, der charakteristisch für die Rauchgrenze (33), die Verlöschgrenze (34), einen Turbinenbetriebsparameter (35) zur Charakterisierung abnormer Betriebszustände, ein Redundanzregelgesetz (36), den Gesamtbrennstoffstrom (37), einen Bereich von Brennstoffverhältnissen, der aufgrund von hydrodynamischen oder thermischen Randbedingungen nicht einstellbar ist (38), den Brennstoffdruck (39) im Brennstoffsystem des Pilotbrenners (A) und / oder den Brennstofffüllungsgrad (40) ist.

12. Vorrichtung nach mindestens einem der vorhergehenden

henden Ansprüche, **gekennzeichnet durch** eine Ventilvorrichtung (101) zur Einstellung des End-Stufungsverhältnisses (α) zwischen mindestens einem Pilotbrenner (A) und / oder mindestens einem Hauptbrenner (B), wobei der mindestens eine Pilotbrenner (A) relativ zum mindestens einen Hauptbrenner (B) ein fetteres Brennstoffgemisch in die Brennkammer (100) einbringt, wobei sich die Einstellung der Ventilvorrichtung (101) aus dem End-Stufungsverhältnis (α) insbesondere **durch** eine streng monotone Funktion ergibt.

13. Flugzeugtriebwerk oder Gasturbine mit einer Vorrichtung nach mindestens einem der Ansprüche 1 bis 12.

14. Verwendung einer Vorrichtung nach mindestens einem der Ansprüche 1 bis 12 in einer Steuerung einer Gasturbine oder eines Flugzeugtriebwerkes.

**Claims**

1. Device for determining a staging ratio, in particular a final staging ratio (α) in at least one staged combustion chamber (100) of a gas turbine or of an aircraft engine, wherein, a first adjusting device (101) is configured for determining a preselected required staging ratio (11) for the staged combustion chamber (100), wherein this determination can be carried out as a function of the detection of a steady state (31) or the detection of a transient state (32), wherein the detection can be carried out in particular based on a combustion chamber exit temperature (T40), a turbine input temperature and/ or a value for the fuel/ air ratio (FAR40), wherein a required staging ratio (12) is to be determined as a function of the determination of a smoke limit (33), wherein the respectively lower value of the preselected required staging ratio (11) and of the required staging ratio (12) for the smoke limit (33) is determined as a first staging ratio parameter (21).

2. Device in accordance with Claim 1, **characterized by** a determination means (41) for distinguishing the steady state (31) from the transient state (32), in particular the temperature value that is representative of the staging ratio (α) in the combustion chamber (100), wherein an output signal of the determination means (41) affects the position of the first adjusting device (1).

3. Device in accordance with Claim 1 or 2, **characterized in that** a second staging ratio parameter (22) can be determined from the first staging ratio parameter (21) and a required staging ratio (13) for an extinction limit (34), said second parameter being representative of the extinction limit (34) of the flame in the combustion chamber (100), in particular representative of the lean flame extinction (WEX Lim), wherein the respectively higher value of the required staging ratio (13) for the extinction limit (34) and of the first staging ratio parameter (21) can be determined as second staging ratio parameter (22).

4. Device in accordance with at least one of the preceding Claims, **characterized by** a second adjusting device (2) for determining a third staging ratio parameter (23) as a function of at least one required staging ratio (14), which can be determined as a function of a backup control set (36), wherein a presetting of the second adjusting device (2) is selected in particular as a function of the backup control set (36).

5. Device in accordance with at least one of the preceding Claims, **characterized by** a third adjusting device (3) for determining a fourth staging ratio parameter (24) as a function of at least one required staging ratio (15) for taking into account turbine operating states, which ratio can be determined as a function of a turbine operating parameter (35) for characterizing abnormal operating states, wherein particularly the selection of a presetting of the third adjusting device (3) can be carried out in particular as a function of the turbine operating parameter (35) for characterizing abnormal operating states, wherein in particular at least one turbine operating parameter (35) for characterizing abnormal operating states characterizes the starting of the turbine, the re-ignition of the turbine, a water ingestion, a pressure surge and/ or an extinction of the combustion.

6. Device in accordance with at least one of the preceding Claims, **characterized in that** a required staging ratio (16) for minimum fuel flow can be determined as a function of the total fuel flow (37), wherein the respectively higher value of the required staging ratio (16) for minimum fuel flow or of the fourth staging ratio parameter (24) can be determined as a fifth staging ratio parameter (25).

7. Device in accordance with at least one of the preceding Claims, **characterized in that** a required staging ratio (17) for taking into account a blocking range (38) can be determined as a function of parameters that are representative of the range of fuel flow ratios, said range not being adjustable due to hydrodynamic and/ or thermal boundary conditions (38).

8. Device in accordance with at least one of the preceding Claims, **characterized in that** a required staging ratio (18) for safeguarding against excess fuel pressure can be determined as a function of the fuel pressure (39) in the fuel system of the pilot burner (A), wherein the respectively lowest value of the fifth staging ratio parameter (25), the required staging ratio (17) for taking into account a blocking range (38), and the required staging ratio (18) for safeguarding against excess fuel pressure can be determined as sixth staging ratio parameter (26).

9. Device in accordance with at least one of the preceding Claims, **characterized in that** a required staging ratio (19) for the fuel filling level (40) of an injector can be determined as a function of the fuel filling level (40).

10. Device in accordance with at least one of the preceding Claims, **characterized in that** a final staging ratio ($\alpha$) can be selected by a fourth adjusting device (4) between the sixth staging ratio parameter (26) and the required staging ratio (19) for the fuel filling level of the injector, wherein a presetting of the fourth adjusting device (4) is possible due to the required staging ratio (19) for the fuel filling level of the injector.

11. Device in accordance with at least one of the preceding Claims, **characterized in that** the final staging ratio ($\alpha$) is set as a function of at least one staging ratio (12, 13, 14, 15, 16, 17, 18, 19) and/or at least one staging ratio parameter (21, 22, 23, 24, 25, 26) that is characteristic of the smoke limit (33), the extinction limit (34), a turbine operating parameter (35) for characterizing abnormal operating states, a backup control law (36), the total fuel flow (37), a range of fuel ratios that cannot be set due to hydrodynamic or thermal boundary conditions (38), the fuel pressure (39) in the fuel system of the pilot burner (A) and/ or the fuel filling level (40).

12. Device in accordance with at least one of the preceding Claims, **characterized by** a valve device (101) for setting the final staging ratio ($\alpha$) between at least one pilot burner (A) and/ or at least one main burner (B), wherein the at least one pilot burner (A) introduces a richer fuel mixture into the combustion chamber (100) compared to the at least one main burner (B), wherein the setting of the valve device (101) results from the final staging ratio ($\alpha$) in particular by applying a strictly monotonic function.

13. Aircraft engine or gas turbine having a device in accordance with at least one of Claims 1 to 12.

14. Application of a device in accordance with at least one of Claims 1 to 12 in a control of a gas turbine or of an aircraft engine.

## Revendications

1. Dispositif pour la détermination d'un rapport d'étagement, notamment d'un rapport d'étagement final (α) dans au moins une chambre de combustion étagée (100) d'une turbine à gaz ou d'un moteur d'avion, sachant qu'un premier dispositif de réglage (101) est configuré pour déterminer un rapport d'étagement requis présélectionné (11) pour la chambre de combustion étagée (100), sachant que cette détermination est réalisable en fonction de la détection d'un état stationnaire (31) ou la détection d'un état transitoire (32), sachant qu'est réalisable la détection notamment basée sur une température de sortie de la chambre de combustion (T40), une température d'entrée de la turbine et/ou une valeur pour le rapport carburant-air (FAR40), sachant qu'un rapport d'étagement requis (12) doit être déterminé en fonction de la détermination d'une limite de fumée (33), sachant qu'est déterminé comme un premier paramètre de rapport d'étagement (21) la plus petite valeur respective du rapport d'étagement requis présélectionné (11) et du rapport d'étagement requis (12) pour la limite de fumée (33).

2. Dispositif selon la revendication n° 1, **caractérisé par** un moyen de détermination (41) pour différencier l'état stationnaire (31) de l'état transitoire (32), notamment la valeur de température qui est représentative pour le rapport d'étagement (α) dans la chambre de combustion (100), sachant qu'un signal de sortie du moyen de détermination (41) influe sur la position du premier dispositif de réglage (1).

3. Dispositif selon la revendication n° 1 ou n° 2, **caractérisé en ce qu'**un deuxième paramètre de rapport d'étagement (22) est déterminable à partir du premier paramètre de rapport d'étagement (21) et d'un rapport d'étagement requis (13) pour une limite d'extinction (34), lequel deuxième paramètre est représentatif pour la limite d'extinction (34) de la flamme dans la chambre de combustion (100), notamment représentatif pour l'extinction pauvre de la flamme (WEX Lim), sachant qu'est déterminable comme deuxième paramètre de rapport d'étagement (22) respectivement la plus grande valeur du rapport d'étagement requis (13) pour la limite d'extinction (34) et du premier paramètre de rapport d'étagement (21).

4. Dispositif selon au moins l'une des revendications précédentes, **caractérisé par** un deuxième dispositif de réglage (2) pour la détermination d'un troisième paramètre de rapport d'étagement (23) en fonction d'au moins un rapport d'étagement requis (14), qui est déterminable en fonction d'un jeu de contrôle de redondance (36), sachant que la sélection d'un préréglage du deuxième dispositif de réglage (2) a lieu notamment en fonction du jeu de contrôle de redondance (36).

5. Dispositif selon au moins l'une des revendications précédentes, **caractérisé par** un troisième dispositif de réglage (3) pour la détermination d'un quatrième paramètre de rapport d'étagement (24) en fonction d'au moins un rapport d'étagement requis (15) pour la prise en compte d'états de fonctionnement de la turbine qui est déterminable en fonction d'un paramètre de fonctionnement de la turbine (35) servant à la caractérisation d'états de fonctionnement anormaux, sachant que notamment la sélection d'un préréglage du troisième dispositif de réglage (3) est exécutable notamment en fonction du paramètre de fonctionnement de la turbine (35) servant à la caractérisation d'états de fonctionnement anormaux, sachant que notamment au moins un paramètre de fonctionnement de la turbine (35) servant à la caractérisation d'états de fonctionnement anormaux, caractérise le démarrage de la turbine, le rallumage de la turbine, une entrée d'eau, un coup de pression et/ou une extinction de la combustion.

6. Dispositif selon au moins l'une des revendications précédentes, **caractérisé en ce qu'**un rapport d'étagement requis (16) pour un flux de carburant minimal est déterminable en fonction du flux de carburant total (37), sachant que la plus grande valeur respective du rapport d'étagement requis (16) pour un flux de carburant minimal ou du quatrième paramètre de rapport d'étagement (24) est déterminable comme un cinquième paramètre de rapport d'étagement (25).

7. Dispositif selon au moins l'une des revendications précédentes, **caractérisé en ce qu'**un rapport d'étagement requis (17) pour la prise en compte d'une plage de blocage (38) est déterminable en fonction de paramètres représentatifs de la plage de rapports de flux de carburant, laquelle plage n'est pas réglable en raison des conditions limites hydrodynamiques et/ou thermiques (38).

8. Dispositif selon au moins l'une des revendications précédentes, **caractérisé en ce qu'**un rapport d'étagement requis (18) pour protéger contre une surpression du carburant est déterminable en fonction de la pression du carburant (39) dans le circuit de carburant du brûleur pilote (A), sachant que respectivement la plus petite valeur du cinquième paramètre de rapport d'étagement (25), du rapport d'étagement requis (17) pour la prise en compte d'une plage de blocage (38) et du rapport d'étagement requis (18) pour protéger contre une surpression du carburant est déterminable comme sixième paramètre de rapport d'étagement (26).

**9.** Dispositif selon au moins l'une des revendications précédentes, **caractérisé en ce qu'**un rapport d'étagement requis (19) pour le niveau de remplissage de carburant (40) d'un injecteur est déterminable en fonction du niveau de remplissage de carburant (40).

**10.** Dispositif selon au moins l'une des revendications précédentes, **caractérisé en ce qu'**un rapport d'étagement final ($\alpha$) est sélectionnable par le biais d'un quatrième dispositif de réglage (4) entre le sixième paramètre de rapport d'étagement (26) et le rapport d'étagement requis (19) pour le niveau de remplissage de carburant de l'injecteur, sachant qu'un préréglage du quatrième dispositif de réglage (4) est possible par le biais du rapport d'étagement requis (19) pour le niveau de remplissage de carburant de l'injecteur.

**11.** Dispositif selon au moins l'une des revendications précédentes, **caractérisé en ce que** le réglage du rapport d'étagement final ($\alpha$) a lieu en fonction d'au moins un rapport d'étagement (12, 13, 14, 15, 16, 17, 18, 19) et/ ou d'au moins un paramètre de rapport d'étagement (21, 22, 23, 24, 25, 26) qui est caractéristique pour la limite de fumée (33), la limite d'extinction (34), un paramètre de fonctionnement de la turbine (35) servant à la caractérisation des états de fonctionnement anormaux, une loi de contrôle de redondance (36), le flux de carburant total (37), une plage de rapports de carburant qui n'est pas réglable en raison des conditions limites hydrodynamiques ou thermiques (38), la pression du carburant (39) dans le circuit de carburant du brûleur pilote (A) et/ ou le niveau de remplissage de carburant (40).

**12.** Dispositif selon au moins l'une des revendications précédentes, **caractérisé par** un dispositif à soupape (101) servant au réglage du rapport d'étagement final ($\alpha$) entre au moins un brûleur pilote (A) et/ ou au moins un brûleur principal (B), sachant que ledit au moins un brûleur pilote (A) introduit dans la chambre de combustion (100) un mélange de carburant plus riche par rapport audit au moins un brûleur principal (B), sachant que le réglage du dispositif à soupape (101) résulte du rapport d'étagement final ($\alpha$) notamment en appliquant une fonction strictement monotone.

**13.** Moteur d'avion ou turbine à gaz doté d'un dispositif selon au moins l'une des revendications n° 1 à n° 12.

**14.** Utilisation d'un dispositif selon au moins l'une des revendications n° 1 à n° 12 dans un contrôle d'une turbine à gaz ou d'un moteur d'avion.

WF

101

$B_B$

$B_A$

Zündung

Hauptbrennstoffleitung

Pilotbrennstoffleitung

B

Hauptstufe
(main stage)

E
Turbinenleitrad

G

Vorstufe
(pilot stage)

Flammrohr (liner)

Vordiffusor

A

Fig. 1

EP 3 023 698 B1

Fig. 2A

Fig. 2B

Fig. 2C

Fig. 3

EP 3 023 698 B1

```
┌──────────────────────────┐
│    Stationärer Zustand    │──── 31
└──────────────────────────┘
```

┌─────────────────┐      ┌─────────────────────┐                    ┌─────────────────────────┐      ┌─────────────────┐
│ Schubhebel-     │----->│ T40 Vorhersage      │      ～41    41～  │ Zeitliche Änderung      │<-----│ Brennstofffluss │
│ bewegung        │      │ delta >             │                    │ Brennstofffluss <       │      │                 │
│                 │      │ Grenzwert           │                    │ Grenzwert               │      │                 │
└─────────────────┘      └─────────────────────┘                    └─────────────────────────┘      └─────────────────┘

```
┌──────────────────────────┐
│    Transienter Zustand    │──── 32
└──────────────────────────┘
```

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9517632 A1
- EP 1079179 B1
- WO 9309339 A1
- EP 1746347 A2
- US 6389816 B1
- US 5261222 A